# EUROPÄISCHE PATENTSCHRIFT

(11) **EP 4 001 734 B1**
(45) Veröffentlichungstag und Bekanntmachung des Hinweises auf die Patenterteilung: **23.08.2023**
(21) Anmeldenummer: 20020520.1
(22) Anmeldetag: 11.11.2020
(51) Int. Cl.: F17D 3/05, F17D 1/04

(54) **VERFAHREN ZUM TRANSPORTIEREN VON WASSERSTOFF**
METHOD FOR TRANSPORTING HYDROGEN
PROCÉDÉ DE TRANSPORT DE L'HYDROGÈNE

(43) Veröffentlichungstag der Anmeldung: 25.05.2022
(73) Patentinhaber: L'Air Liquide, Société Anonyme pour l'Etude et l'Exploitation des Procédés Georges Claude, 75007 Paris (FR)
(72) Erfinder: Bauer, André, 31-545 Krakow (PL); Jozwik, Piotr, 31-545 Krakow (PL); Pedzich, Dominik, 31-545 Krakow (PL)
(74) Vertreter: Dropsch, Holger

(56) Entgegenhaltungen:
- EP-A1- 2 979 743
- WO-A1-2019/180032
- US-A1- 2010 322 845
- US-A1- 2019 013 532

## Beschreibung

### Gebiet der Erfindung

Die Erfindung betrifft ein Verfahren zum Transportieren von Wasserstoff mittels eines Erdgas-Leitungssystems, insbesondere mittels eines bereits bestehenden Erdgas-Leitungssystems.

### Stand der Technik

Erdgas ist ein Gemisch aus mehreren Komponenten, wobei Methan den Hauptbestandteil darstellt. Abhängig vom Gewinnungsstandort und Weiterverarbeitungsverfahren kann es kleine Anteile von Wasserstoff (H₂) enthalten. Für die Verteilung von Erdgas über Pipeline-Netze werden die genehmigten Wasserstoff-Konzentrationen durch nationale Gesetze geregelt. Zum Beispiel ist in Deutschland ein Wasserstoff-Maximalgehalt von 5 Vol.-% erlaubt. (DVGW, 2013. Gasbeschaffenheit. G 260. Deutscher Verein des Gas- und Wasserfaches e.V.). Somit ist das Erdgasnetz bereits heute für den Mittransport geringer Mengen an Wasserstoff geeignet.

Die Energiewende zielt letztlich auf eine kohlenstofffreie Energiewirtschaft ab. Um dieses Ziel zu erreichen, wird derzeit von verschiedenen Unternehmen, politischen Entscheidungsträgern und anderen Institutionen evaluiert, Wasserstoff aus erneuerbaren Quellen wie solar/windbetriebene Elektrolyse oder Biogas/Deponiegas-Reformierung aus zentralisierten Offshore- oder Onshore-Wind- und Solarparks sowie aus dezentralisierten kleineren Einheiten in das bestehende Erdgasleitungsnetz einzuspeisen. Dies wird dazu beitragen, regenerativen Wasserstoff zu Endverbrauchern wie Raffinerien (Verbraucher mit hoher Kapazität), Wasserstoff-Tankstellen (Verbraucher mit geringer Kapazität) usw. unter Nutzung der bestehenden Infrastruktur zu transportieren.

Generell ist für die Verteilung des Wasserstoffs langfristig ein eigenes Leitungsnetz bzw. die Umstellung von Erdgasleitungen auf Wasserstoff vorgesehen, wobei die zu erwartenden Investitionskosten enorm sind. Als Brückentechnologie wird daher die Durchführbarkeit der Einspeisung von Wasserstoff in die Erdgaspipelines in einer Größenordnung von zunächst 5 bis 20 mol-% und später bis zu 50 mol-% geprüft und es werden mögliche Auswirkungen auf das Pipelinesystem bewertet, die beispielsweise die Auswirkungen des Wasserstoffgehalts auf das Pipelinematerial in Bezug auf Korrosion und Porosität und die Anforderungen für Modifikationen des Systems betreffen.

Das Konzept des Transports von Wasserstoff im Erdgasnetz wurde bereits seit langem diskutiert und wird gegenwärtig verstärkt untersucht, beispielsweise im Zuge von durch die EU geförderten Forschungsprojekten (z. B. EU-Projekt NaturalHy, EU-Projekt-ID: 502661, 2004-2009 oder DoE-Projekt "Blending Hydrogen into Natural Gas Pipeline Networks: A Review of Key Issues", Technical Report NREL/TP-5600-51995, März 2013). Eine zentrale Aufgabenstellung betrifft in diesem Zusammenhang die sichere und effiziente Rückgewinnung des mittransportierten Wasserstoffs aus dem Erdgas-Wasserstoff-Gemisch.

Die Rückgewinnung von Wasserstoff aus Raffinerieabgas ist ein gut dokumentiertes und angewandtes Verfahren, bei dem beispielsweise Membranen oder die PSA-Technologie (Druckwechseladsorption) zum Einsatz kommen. Dazu gehört die Rückgewinnung von Wasserstoff aus den Rücklaufströmen, beispielsweise von Hydrocrackern und Hydrotreatern. Diese Ströme enthalten typischerweise eine relativ hohe Menge an Wasserstoff, typischerweise zwischen 50 und 95 mol-%, und verschiedene Kohlenwasserstoffkomponenten mit Kohlenstoffzahlen von typischerweise C₁ bis C₄ und im Spurenbereich auch C₄₊-Kohlenwasserstoffe.

In der Erdgasindustrie werden bereits in umfangreichem Maße Trennverfahren eingesetzt, um Störkomponenten, beispielsweise Schwefelwasserstoff (H₂S) oder Kohlendioxid (CO₂) abzutrennen oder um den Gehalt des Erdgases beispielsweise an Flüssiggaskomponenten wie Propan oder Butan zu reduzieren. Die hierbei angewandten Technologien umfassen die Membrantrennung, Gaswaschverfahren mit aminhaltigen Waschmitteln und die kryogene Gaszerlegung.

Der Ansatz, mittransportierten Wasserstoff aus einem Erdgas-Pipelinenetz wiederzugewinnen, wird jedoch auch neue Herausforderungen bei der Trennung mit sich bringen, die es in der Öl- und Gasindustrie derzeit nicht gibt, nämlich:
1. Eine Reduzierung des Wasserstoff-Gehalts vor den Erdgasverbrauchern durch Abtrennung von H₂ aus dem auf z. B. zwischen 2 und 50 mol-% wasserstoffangereicherten Erdgas bis auf typischerweise unter 0,5 Mol% für typische Erdgasverbraucher, wobei sich dieser Grenzwert aus gesetzlichen oder behördlichen Limitierungen oder Spezifikationen der Erdgasverbraucher ergibt,
2. die Rückgewinnung von Reinwasserstoff aus einem Gemisch aus Erdgas und Wasserstoff mit Reinheiten von >90 mol-%, typischerweise bis zu >99,9 Mol-% und höher für die weitere Verwendung, wobei sowohl zentralisierte Wasserstoff-Großverbraucher (z. B. Raffinerien) als auch dezentralisierte Wasserstoff-Kleinverbraucher (z. B. Wasserstoff-Tankstellen zur Sicherstellung H₂-Mobilität) entlang des Erdgasnetzes beliefert werden müssen,
3. eine flexible Anpassung des Wasserstoffgehalts im wasserstoffangereicherten Erdgasleitungsnetz durch mehrere dezentrale Wasserstoff- und Erdgasproduzenten sowie Wasserstoff- und Erdgasverbraucher mit ggf. zeitlich fluktuierenden Abnahmemengen.

Hinsichtlich der Rückgewinnung und Reinigung von Wasserstoff aus wasserstoffangereichertem Erdgas wird in mehrere Studien, beispielsweise den oben erwähnten EU- oder DoE-Förderprojekten, die Verwendung der Druckwechseladsorption (PSA), Pd-Membranen, Kohlenstoff-Molekularsieben oder elektrochemischer Wasserstoffabtrennung vorgeschlagen.

Die PSA erfordert jedoch einen Wasserstoffgehalt von größer als 50 bis 60 mol-%, um den Wasserstoff effizient und wirtschaftlich aus dem wasserstoffangereicherten Erdgas zurückzugewinnen und zu reinigen, während in der Praxis der Wasserstoffgehalt zwischen 5 bis 20 mol-% bis zu maximal 50 mol-% schwankt.

Pd-Membranen würden das Trennziel erreichen, sie sind jedoch aufgrund ihres Palladiumgehalts sehr teuer und daher nur für Ströme mit sehr geringer Kapazität einsetzbar. Sie arbeiten auch bei sehr hohen Temperaturen von typischerweise über 300 °C und bieten nur relativ niedrige Wasserstoff-Rückgewinnungsraten, was sowohl zu einer Erhöhung der Investitionslosten als auch der Betriebskosten führt.

Kohlenstoff-Molekularsiebe und die elektrochemische Wasserstoffabscheidung sind noch nicht kommerzialisiert worden und werden daher nicht als eine machbare kommerzielle Option innerhalb der nächsten fünf bis zehn Jahre angesehen.

Mehrere Unternehmen haben daher angekündigt, mit Pilotversuchen mit kommerziellen Membransystemen zu beginnen; hierzu wird beispielsweise auf die Internetseite https://www.renewable-energy-industry.com/news/press-releases/pm-6661-separation-of-hydrogen-from-gas-mixtures-with-membranes verwiesen. Diese Tests berücksichtigen jedoch nur Versuche mit verschiedenen Arten von Membranen, nicht dagegen die Erprobung eines technischen Verfahrens zur Rückgewinnung von Wasserstoff aus Erdgas mit den oben erörterten Anforderungen, mit dem insbesondere die erforderliche hohe Reinheit des Wasserstoffprodukts erreicht wird.

Weitere Veröffentlichungen beschäftigen sich eher mit der Einleitung des Wasserstoffs in ein Erdgasleitungsnetz oder der Einstellung eines definierten Wasserstoffgehalts in demselben. So offenbart die Patentschrift EP 2979743 A1 eine technische Lösung, um den Wasserstoffgehalt in einer mit Wasserstoff angereicherten Erdgasleitung unter den gesetzlichen Grenzwerten zu halten. Dabei ist jedoch zu berücksichtigen, dass regulatorische Anforderungen an Wasserstoffgehalte im Zuge des fortschreitenden Erkenntnisgewinns geändert werden können. Ferner erfordert die offenbarte technische Lösung ein großes Speichervolumen, beispielsweise eine Salzkaverne, um den Wasserstoffgehalt im Leitungsnetz einstellen zu können. Auch befasst sich die zitierte Patentschrift nicht mit einer möglichen Akkumulation von Kohlendioxid bzw. Sauerstoff im Leitungsnetz unter Verwendung der beschriebenen technischen Lösung.

Das Gebrauchsmuster CN 206723836 U beschreibt eine Möglichkeit, wie mit Hilfe spezieller Membranen des Sweep-Typs Wasserstoff, der unter niedrigerem Druck zur Verfügung steht, effektiv in ein Erdgasnetz, das unter höherem Druck arbeitet, eingemischt werden kann.

Zusammenfassend lässt sich sagen, dass der Stand der Technik derzeit keine zufriedenstellende technische Lösung für die Abtrennung von Wasserstoff aus einem mit Wasserstoff angereicherten Erdgasstrom anbietet, die die oben erörterten Anforderungen erfüllt. Es besteht daher weiterhin Bedarf an effektiven und effizienten Verfahren zum Transportieren von Wasserstoff mittels eines Erdgas-Leitungssystems und zum Wiedergewinnen sowohl des transportierten Erdgases als auch des mittransportierten Wasserstoffs.

### Beschreibung der Erfindung

Die Aufgabe der vorliegenden Erfindung besteht daher darin, ein solches Verfahren anzugeben, das die erwähnten Nachteile des Stands der Technik nicht aufweist.

Diese Aufgabe wird in einem ersten Aspekt durch ein Verfahren mit den Merkmalen des Anspruchs 1 gelöst. Weitere Aspekte der Erfindung ergeben sich aus den abhängigen Verfahrensansprüchen.

Alle etwaigen Druckangaben erfolgen als Absolutdruckeinheiten, abgekürzt bara, oder als Überdruckeinheiten, abgekürzt barg, wenn im jeweiligen Einzelzusammenhang nichts anderes angegeben wird.

Unter einem weiteren Reinigungs-, Konditionierungs- oder Verarbeitungsschritt des Rohsynthesegases werden alle Maßnahmen und Verfahrensschritte verstanden, die zur Herstellung eines Reinsynthesegases, bzw. von reinem Wasserstoff und/oder reinem Kohlenmonoxid aus dem Stand der Technik bekannt sind. Dazu zählen die CO-Konvertierung zur Erhöhung des Wasserstoffanteils im Synthesegas, die Abtrennung von Kohlendioxid mittels eines geeigneten Waschverfahrens wie beispielweise des Rectisol-Verfahrens oder die Wäsche mit aminhaltigen Waschmitteln, die kryogene Gaszerlegung zum Erzeugen von reinem Kohlenmonoxid, die Druckwechseladsorption (PSA) zum Erzeugen von Reinwasserstoff sowie physikalische Verfahrensschritte wie beispielsweise Abkühlen, Kondensieren, Abtrennen des Kondensats.

Der Erfindung liegt die Erkenntnis zugrunde, dass beim Transportieren von Wasserstoff mittels eines Erdgas-Leitungssystems die Anordnung einer Wasserstoff-Entnahmestelle stromabwärts einer oder bevorzugt mehrerer Erdgas-Entnahmestellen besondere Vorteile bietet, da nachfolgend der einen oder mehreren Erdgas-Entnahmestellen eine Auftrennung des ausgeleiteten Gasstroms mittel Membrantrennung in einen an Wasserstoff angereicherten Permeatstrom und einen an Wasserstoff abgereicherten Retentatstrom erfolgt. Der bezüglich Methan angereicherte Retentatstrom wird an einen Erdgasverbraucher abgegeben und der an Wasserstoff angereicherte Permeatstrom weiterverwertet, beispielsweise stromabwärts der Erdgas-Entnahmestelle in die Transportleitung des Leitungssystems zurückgeführt. Hierdurch steigt die Wasserstoffkonzentration in dem transportierten Gasgemisch schrittweise an, so dass Reinwasserstoff aus dem oder den Wasserstoff-Entnahmeströmen in besonders effizienter Weise zurückgewonnen werden kann. Besondere Vorteile werden insbesondere erhalten, wenn die Abtrennung des Wasserstoffs nachfolgend der einen oder mehreren Erdgas-Entnahmestellen und/oder nachfolgend der einen oder mehreren Wasserstoff-Entnahmestellen mittels mehrstufiger Membrantrennung erfolgt. Weitere Vorteile werden insbesondere erhalten, wenn die weitere Rückgewinnung von Reinwasserstoff in einer PSA-Anlage erfolgt.

Im Rahmen der Erfindung wurden Studien durchgeführt, die sich auf umfassende Daten aus bestehenden, in Betrieb befindlichen Wasserstoffmembran- und PSA-Anlagen in Raffinerien und Erdgasanwendungen stützen, indem diese Daten auf die oben genannten Ziele transformiert wurden. Die Studien umfassten die oben beschriebenen Trennaufgaben.

Es hat sich gezeigt, dass Membranen in der Lage sind, die oben genannten Herausforderungen zu meistern, entweder als eigenständige Systeme in einstufiger, zweistufiger oder mehrstufiger Anordnung oder in Kombination mit einer PSA.

Die Untersuchungen haben gezeigt, dass vor allem kommerziell erhältliche Polymermembranen, vorzugsweise Hohlfasermembranen auf Polyimidbasis oder Polyamidbasis oder andere Membrantypen, die konventionell zur Wasserstoffrückgewinnung aus Raffinerieabgas eingesetzt werden, für diesen Zweck geeignet sind - einschließlich Membranen auf der Basis von Celluloseacetat, Polysulfon, Polyimid, Polyamid, Polyaramid u. a.

Membranen werden aufgrund der folgenden Vorteile eingesetzt:
- Sie weisen hohe Rückgewinnungsraten auf, die zu einem geringen Verlust von Wasserstoff an die Erdgasnutzer führen,
- die Spezifikation von Erdgas nach internationalen Vorschriften kann mit konventionell erhältlichen Wasserstoffmembranmodulen (z.B. Hohlfasermembranen auf Polyimidbasis oder Polyamidbasis) erfüllt werden,
- sie ermöglichen eine einfache Anpassung an unterschiedliche Kapazitäten für große und kleine Verbraucher mit hoher Flexibilität im Normalbetrieb,
- bei geeigneter Materialauswahl sind sie unempfindlich gegen einen etwaigen O₂/CO₂-Gehalt und andere Verunreinigungen in der Erdgas-Transportleitung (Pipeline),
- es kann mit ihrer Hilfe ein maßgeschneidertes Schema unter Berücksichtigung verschiedener Einspeisepunkte von Wasserstoff und Erdgas sowie verschiedener Standorte von Erdgas- und Wasserstoffverbrauchern entwickelt werden.

Durch den Einsatz von mobilen, modular montierten Membrananlagen können einfach zu installierende, modularisierte Lösungen für kleine Erzeuger wie z. B. Onshore-Windräder mit lokaler, elektrolytischer Wasserstofferzeugung oder Biogasanlagen und/oder Verbraucher im Rahmen der Wasserstoff-Mobilität entwickelt werden, die durch Hinzufügen zusätzlicher Membranaggregate leicht nachgerüstet werden können.

### Bevorzugte Ausgestaltungen der Erfindung

Ein zweiter Aspekt des erfindungsgemäßen Verfahrens ist dadurch gekennzeichnet, dass der Wasserstoff-Ausleitungsstrom einer PSA-Anlage zugeführt und in diese eingeleitet wird und ein Reinwasserstoffstrom und mindestens ein PSA-Abgasstrom aus der PSA-Anlage ausgeleitet wird. Durch die Kombination einer Membran-Vortrennung und einer PSA-Nachtrennung kann auf besonders effiziente Weise ein besonders reiner Wasserstoffstrom zurückgewonnen werden.

Ein dritter Aspekt des erfindungsgemäßen Verfahrens ist dadurch gekennzeichnet, dass die Schritte (c) bis (f) für weitere Erdgasverbraucher mindestens einmal, bevorzugt mehrfach, meist bevorzugt mindestens zweimal wiederholt werden. Dabei wird schrittweise der Gehalt des im Erdgas mittransportierten Wasserstoffs erhöht, wodurch sich die nachfolgende Rückgewinnung des Wasserstoffs als Reingas erheblich vereinfacht, beispielsweise in einer nachgeschalteten PSA-Anlage. Besonders günstig ist es dabei, wenn mindestens zwei Anreicherungsschritte erfolgen und/oder der Wasserstoffgehalt mindestens größer als 35 mol-%, bevorzugt mindestens 40 mol-%, weiter bevorzugt mindestens 50 mol-%, meist bevorzugt mindestens 60 mol-% beträgt.

Ein vierter Aspekt des erfindungsgemäßen Verfahrens ist dadurch gekennzeichnet, dass der zweite Erdgasverbraucher eine Dampfreformierungsanlage ist, wobei der zweite Retentatstrom einen Teil des Dampfreformierungs-Einsatzstroms bildet. Auf diese Weise kann der zweite Retentatstrom sinnvoll genutzt werden. Wegen seines erhöhten Anteils an Kohlenwasserstoffen, beispielsweise Methan, eignet er sich in besonderem Maße als Teil des Dampfreformierungs-Einsatzstroms.

Ein fünfter Aspekt des erfindungsgemäßen Verfahrens ist dadurch gekennzeichnet, dass mittels der Dampfreformierungsanlage ein Rohwasserstoffstrom erzeugt wird, der zur weiteren Reinigung in die PSA-Anlage eingeleitet wird. Bei den meisten Dampfreformierungsanlagen, die auf die Herstellung von Wasserstoff als Hauptprodukt oder Nebenprodukt abzielen, bildet eine PSA-Anlage den letzten Aufarbeitungsschritt des erzeugten Synthesegases zu Reinwasserstoff. Da somit eine PSA-Anlage ohnehin vorhanden ist, kann sie zusätzlich bzw. gleichzeitig zur Rückgewinnung von Reinwasserstoff aus dem mit dem Erdgas mittransportierten Wasserstoff genutzt werden. Hieraus ergeben sich Synergieeffekte und Vorteile hinsichtlich der benötigten Ausrüstung und des Energieverbrauchs.

Ein sechster Aspekt des erfindungsgemäßen Verfahrens ist dadurch gekennzeichnet, der erste Permeatstrom und/oder der zweite Permeatstrom und/oder die weiteren Permeatströme verdichtet werden. Da der Druckverlust über eine und insbesondere über mehrere hintereinandergeschaltete Membrantrennstufen signifikant ist, ist es von Bedeutung, die an Wasserstoff angereicherten Permeatströme zu verdichten, um sie störungsfrei in die nachfolgenden Konditionierungs- oder Weiterverarbeitungsstufen einleiten zu können.

Ein siebter Aspekt des erfindungsgemäßen Verfahrens ist dadurch gekennzeichnet, dass die Entnahmeströme vor dem Zuführen zu einer Membrantrennvorrichtung aufgeheizt werden, bevorzugt auf eine Temperatur von 30 bis 100 °C aufgeheizt werden. Je höher die Aufheiztemperatur ist, desto geringer ist der Restgehalt an Wasserstoff im Retentatstrom bei einer bestimmten Anzahl von Membranen, wie anhand von Untersuchungen erkannt wurde. Daher wird eine erhöhte Eintrittstemperatur in die Membrantrennvorrichtung bevorzugt, was jedoch erfordern kann, einen Kühler vorzusehen, mit dessen Hilfe der Permeatstrom gekühlt werden kann. Dies gilt insbesondere dann, wenn Konditionierungs- oder Weiterverarbeitungsstufen nachfolgen, die bei vergleichsweise tiefen Temperaturen arbeiten, wie beispielsweise eine PSA-Anlage.

Ein achter Aspekt des erfindungsgemäßen Verfahrens ist dadurch gekennzeichnet, dass im Hinblick auf den siebten Aspekt das Aufheizen der Entnahmeströme vor dem Zuführen zu der Membrantrennvorrichtung durch Verbrennen eines Heizgases erfolgt, das mindestens einen Teil des Retentatstroms der Membrantrennvorrichtung oder mindestens einen Teil des Permeatstroms der Membrantrennvorrichtung oder Mischungen beider umfasst. Auf diese Weise kann ein besonders einfaches und ressourcenschonendes Aufheizen des oder der Entnahmeströme vor dem Zuführen zu einer Membrantrennvorrichtung bewirkt werden. Ein Teil der zur Erwärmung des Einsatzmaterials erforderlichen Wärme kann auch aus der vom Kompressor im Permeatstrom erzeugten Wärme zurückgewonnen werden, woraus sich weitere Vorteile ergeben.

Ein neunter Aspekt des erfindungsgemäßen Verfahrens ist dadurch gekennzeichnet, dass die Entnahmeströme vor dem Zuführen zu einer Membrantrennvorrichtung einem Partikelabscheider und/oder einem Tropfenabscheider zugeführt werden. Diese Maßnahmen tragen dazu bei, die Lebensdauer der nachfolgenden Membrantrennvorrichtung signifikant zu erhöhen.

Ein zehnter Aspekt des erfindungsgemäßen Verfahrens ist dadurch gekennzeichnet, dass der erste Permeatstrom und/oder der zweite Permeatstrom und/oder die weiteren Permeatströme einer Sauerstoff-Entfernungsvorrichtung zugeführt werden. Sauerstoff kann als Spurenverunreinigung im Erdgas vorhanden sein und neigt dazu, die Membrantrennvorrichtung mit dem Permeatstrom zu verlassen. Um einen sicheren und spezifikationsgerechten Reinwasserstoff-Produktstrom zu erzeugen, bietet daher die Nachbehandlung des Permeatstroms in einer Sauerstoff-Entfernungsvorrichtung Vorteile.

Ein elfter Aspekt des erfindungsgemäßen Verfahrens ist dadurch gekennzeichnet, dass der erste Permeatstrom und/oder der zweite Permeatstrom und/oder die weiteren Permeatströme einer Kohlendioxid-Entfernungsvorrichtung zugeführt werden. Auch Kohlendioxid kann als Spurenverunreinigung im Erdgas vorhanden sein und neigt dazu, die Membrantrennvorrichtung mit dem Permeatstrom zu verlassen. Um einen sicheren und spezifikationsgerechten Reinwasserstoff-Produktstrom zu erzeugen, bietet daher die Nachbehandlung des Permeatstroms in einer Kohlendioxid -Entfernungsvorrichtung Vorteile. Dies ist von besonderer Bedeutung, wenn nachgeschaltete Konditionierungs- oder Weiterverarbeitungsstufen empfindlich gegenüber enthaltenem Kohlendioxid sind, beispielsweise falls die entsprechenden Verfahren bei tiefen Temperaturen arbeiten und ausgefrorenes Kohlendioxid zu Verstopfungen in den Zuleitungen führen kann.

Ein zwölfter Aspekt des erfindungsgemäßen Verfahrens ist dadurch gekennzeichnet, dass die Kohlendioxid-Entfernungsvorrichtung mindestens eine Vorrichtung umfasst, die aus der folgenden Gruppe ausgewählt ist: Temperaturwechseladsorptionsvorrichtung (TSA), Druckwechseladsorptionsvorrichtung (PSA), Gaswaschvorrichtung, Anlage zur kryogenen Gaszerlegung.

Ein dreizehnter Aspekt des erfindungsgemäßen Verfahrens ist dadurch gekennzeichnet, dass die Kohlendioxid-Entfernungsvorrichtung eine Gaswaschvorrichtung und/oder eine Vorrichtung zur kryogenen Gaszerlegung umfasst und die zum Betrieb dieser Vorrichtungen benötigte Prozesskälte von einer Luftzerlegungsanlage bezogen wird. An vielen Standorten von Erdgas- oder Wasserstoffverbrauchern sind auch Luftzerlegungsanlagen vorhanden, so dass die die entsprechenden Synergien genutzt werden können. Als Beispiele hierfür können die Standorte von Anlagen zur Methanolsynthese oder Ammoniaksynthese genannt werden.

Ein vierzehnter Aspekt des erfindungsgemäßen Verfahrens ist dadurch gekennzeichnet, dass die erste Membrantrennvorrichtung und/oder die zweite Membrantrennvorrichtung und/oder eine weitere Membrantrennvorrichtung mit mehreren Trennstufen ausgestaltet sind. Vorteile hierbei sind die kompakte, platzsparende Bauweise und der einfache Austausch als Gesamtmodul.

Ein fünfzehnter Aspekt des erfindungsgemäßen Verfahrens ist dadurch gekennzeichnet, dass die Entnahmeströme und/oder die zwischen den mehreren Trennstufen erhaltenen Permeatströme auf Drücke zwischen 20 und 100 bara, bevorzugt zwischen 24 und 80 bara, meist zwischen 40 und kleiner 80 bara, in einem Beispiel etwa 60 bara verdichtet werden, bevor sie in eine nachfolgende Trennstufe eingeleitet werden. Untersuchungen haben gezeigt, dass diese Druckbereiche optimale Arbeitsbedingungen für viele Membrantrennvorrichtungen gewährleisten.

Ein sechzehnter Aspekt des erfindungsgemäßen Verfahrens ist dadurch gekennzeichnet, dass der Wasserstoffgehalt des Erdgas-Transportstroms nach Schritt (b) zwischen 5 mol-% und 50 mol-%, bevorzugt zwischen 5 mol-% und 30 mol-% beträgt und dass der Wasserstoffgehalt des an die Erdgasverbraucher abgegebenen Gasströme weniger als 1 mol-%, bevorzugt weniger als 0,5 mol-% beträgt. Auf diese Weise wird ein effizienter Mittransport von Wasserstoff mit dem Erdgas gewährleistet und es können spezifikationsgerechte Erdgasströme an die Erdgasverbraucher abgegeben werden.

Ein siebzehnter Aspekt des erfindungsgemäßen Verfahrens ist dadurch gekennzeichnet, dass der Wasserstoffgehalt des Wasserstoff-Ausleitungsstroms, der in die PSA-Anlage eingeleitet wird, mindestens größer als 35 mol-%, bevorzugt mindestens 40 mol-%, weiter bevorzugt mindestens 50 mol-%, meist bevorzugt mindestens 60 mol-% beträgt. Durch die Kombination einer optional mehrstufigen Membran-Vortrennung und einer PSA-Nachtrennung kann auf besonders effiziente Weise ein besonders reiner Wasserstoffstrom zurückgewonnen werden. Untersuchungen zeigen, dass dies insbesondere dann gilt, wenn die oben wiedergegebenen Mindestwerte für den Wasserstoffgehalt im Wasserstoff-Ausleitungsstrom eingehalten werden. Besonders günstig ist es dabei, wenn bei der Membran-Vortrennung mindestens zwei Anreicherungsschritte durch Erdgasentnahme erfolgen und der auf diese Weise angereicherte Wasserstoff-Ausleitungsstrom in die PSA-Anlage eingeleitet wird.

Ein achtzehnter Aspekt des erfindungsgemäßen Verfahrens ist dadurch gekennzeichnet, dass das Rückführen des zweiten Retentatstroms in die Transportleitung stromabwärts der ersten Wasserstoff-Entnahmestelle erfolgt, wodurch ein an Wasserstoff abgereicherter Erdgas-Transportstrom erhalten und weitergeleitet wird. Auf diese Weise können Erdgas-Verluste minimiert werden, ohne dass die Rückgewinnung von Reinwasserstoff negativ beeinflusst wird, da die Rückführung des die Erdgasbestandteile enthaltenden zweiten Retentatstroms erst stromabwärts der ersten Wasserstoff-Entnahmestelle erfolgt.

Ein neunzehnter Aspekt des erfindungsgemäßen Verfahrens ist dadurch gekennzeichnet, dass der mindestens eine PSA-Abgasstrom in Transportleitung zurückgeführt oder einem weiteren Erdgasverbraucher zugeführt wird. Auch auf diese Weise können Erdgas-Verluste minimiert werden bzw. energiereiche Komponenten mit positivem Beitrag zum Heizwert zurückgewonnen werden. In diesem Zusammenhang ist es bemerkenswert, dass PSA-Anlagen einen schlechteren Wasserstoffrückgewinnungswirkungsgrad als beispielsweise Membranen aufweisen, so dass ein Anteil an Wasserstoff, beispielsweise 15 %, an das PSA-Abgas verloren geht. Daher ist es in einer Ausgestaltung der Erfindung vorteilhaft, den PSA-Abgasstrom zu verdichten und in den Einspeisestrom einer Membrantrennvorrichtung umzuleiten, die in einem Beispiel einstufig ausgestaltet ist, so dass der apparative Aufwand reduziert wird.

In einem weiteren Aspekt der Erfindung ist insbesondere vorgesehen, dass mindestens einer der Erdgasverbraucher eine Partialoxidationsanlage zur Partialoxidation von Erdgas zu Synthesegas ist. Dabei ist zu beachten, dass das Vorhandensein signifikanter Mengen an Wasserstoff im Feedstrom der Partialoxidationsanlage eher ungünstig ist, wenn der Zweck der Erdgas-Partialoxidation darin besteht, möglichst viel CO für eine nachgeschaltete Verwendung zu produzieren, da hierdurch die CO-Ausbeute reduziert würde. Es empfiehlt sich daher, zunächst mittels einer bereits vorhandenen oder zusätzlich vorgesehenen Membrantrennvorrichtung den Wasserstoff aus dem aus dem Erdgas/Wasserstoff-Gemisch weitgehend zu entfernen und das somit erhaltene Retentat als Teil des Feedstroms der Partialoxidationsanlage zuzuführen. Das ebenfalls erhaltene, an Wasserstoff angereicherte Permeat kann dann entweder weiter gereinigt und für andere Zwecke verwendet werden oder direkt als Brenngas in der Partialoxidationsanlage eingesetzt werden.

### Ausführungsbeispiel

Weiterbildungen, Vorteile und Anwendungsmöglichkeiten der Erfindung ergeben sich auch aus der nachfolgenden Beschreibung von Ausführungs- und Zahlenbeispielen und der Zeichnungen. Dabei bilden alle beschriebenen und/oder bildlich dargestellten Merkmale für sich oder in beliebiger Kombination die Erfindung, unabhängig von ihrer Zusammenfassung in den Ansprüchen oder deren Rückbeziehung.

Es zeigen:
- Fig. 1: ein erstes Beispiel eines Verfahrens bzw. einer Anlage zum Mittransport von Wasserstoff in einer bestehenden Erdgasleitung und zur Wiedergewinnung von spezifikationsgerechtem Erdgas und Reinwasserstoff gemäß Erfindung,
- Fig. 2: ein zweites Beispiel eines Verfahrens bzw. einer Anlage zum Mittransport von Wasserstoff in einer bestehenden Erdgasleitung und zur Wiedergewinnung von spezifikationsgerechtem Erdgas und Reinwasserstoff gemäß Erfindung.

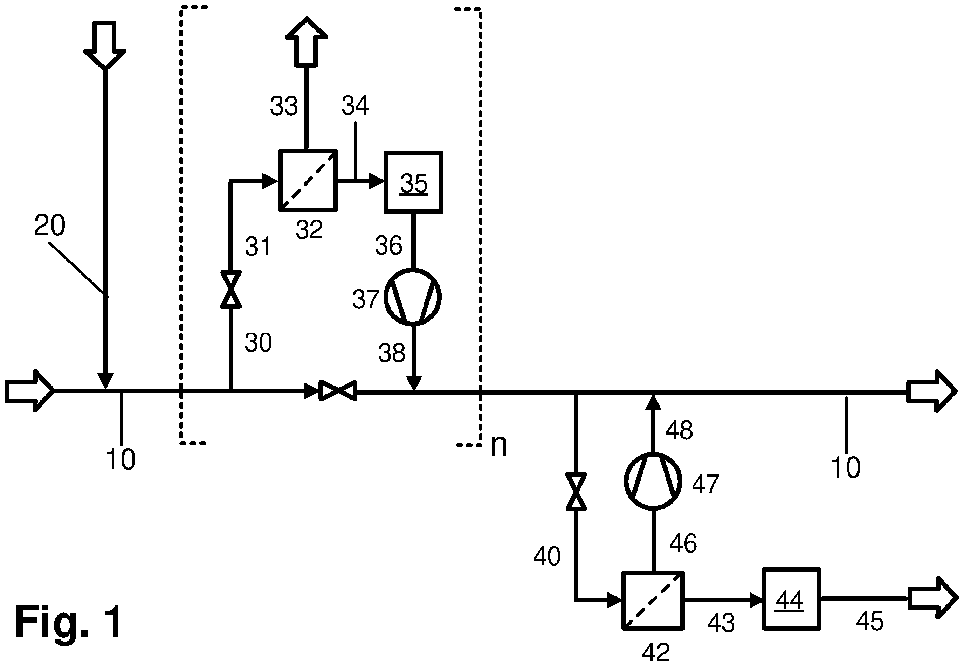

Fig. 1 zeigt ein erstes Beispiel eines Verfahrens bzw. einer Anlage zum Mittransport von Wasserstoff in einer bestehenden Erdgasleitung 10 und zur Wiedergewinnung von spezifikationsgerechtem Erdgas und Reinwasserstoff gemäß einer ersten Ausgestaltung der Erfindung.

Die Transportleitung 10 wird von Erdgas durchströmt, das in diesem Beispiel eine Temperatur von beispielsweise 15 °C (abhängig von den Umgebungsbedingungen) und einen Druck von rund 60 bara aufweist. Über Leitung 20 wird ein Wasserstoffstrom in die Leitung 10 eingeführt, so dass sich stromabwärts der Wasserstoff-Einleitungsstelle ein Wasserstoffgehalt von ca. 10 mol-% ergibt.

Am Ort des ersten Erdgasverbrauchers befindet sich eine erste Erdgas-Entnahmestelle, bei der über Leitung 30, 31 und ein im Leitungsweg angeordnetes Dosierventil ein Teilstrom des Erdgas-Wasserstoff-Gemischs aus Leitung 10 ausgeleitet wird. Sodann wird der ausgeleitete Teilstrom mittels eines nicht bildlich gezeigten Heizers oder Wärmetauschers auf eine Temperatur von 30 bis 100 °C, bevorzugt auf eine Temperatur von 50 bis 90 °C, in einem Beispiel auf eine Temperatur von 70 bis 80 °C aufgeheizt und dann zu einer ersten Membrantrennvorrichtung 32 weitergeführt und in diese eingeleitet. Bevorzugt schließt sich daran ein ebenfalls bildlich nicht gezeigter Partikelabscheider und/oder ein Tropfenabscheider an, der Partikel bzw. Flüssigkeitstropfen mechanisch von der stromabwärts angeordneten Membrantrennvorrichtung fernhält, so dass diese nicht beeinträchtigt wird. In alternativer, bildlich nicht dargestellter, bevorzugter Ausgestaltung wird der ausgeleitete Teilstrom zunächst über einen Partikelabscheider und/oder ein Tropfenabscheider geführt und nachfolgend vor Eintritt in die erste Membrantrennvorrichtung 32 erhitzt. Dies weist den Vorteil auf, dass feste Partikel und/oder Tropfen nicht in die Membrantrennvorrichtung gelangen und dort zu Verschmutzung bzw. zu Verstopfungen führen können. Ferner werden durch das nachfolgende Aufheizen eventuell mitgerissene und nicht abgeschiedene Tröpfchen aus dem ausgeleiteten Teilstrom verdampft, was einen zusätzlichen Schutz der Membranen bietet.

Die Membrantrennvorrichtung kann einstufig oder bevorzugt mehrstufig ausgeführt werden; bei mehrstufiger Ausführung ist aufgrund des eintretenden Druckverlustes über jede Membrantrennstufe eine Verdichtung zwischen den Stufen vorteilhaft.

In der ersten Membrantrennvorrichtung 32 wird ein erster, an Wasserstoff abgereicherter und an Methan angereicherter Retentatstrom erhalten, der über Leitung 33 nach optionaler weiterer Aufarbeitung als spezifikationsgerechtes Erdgas an den ersten Erdgasverbraucher abgegeben wird. In einem bildlich nicht gezeigten Beispiel wird der über Leitung 33 ausgeleitete Gasstrom mittels eines Kühlers oder Wärmetauschers gekühlt, bevor er an den ersten Erdgasverbraucher abgegeben wird. Dasselbe gilt in einem weiteren Beispiel für weitere oder bevorzugt alle an Erdgasverbraucher abgegebene Retentatströme. Dies ist von Bedeutung, da Erdgasverbraucher zumeist auf die Verarbeitung kühler Erdgasströme, dagegen nicht auf die Verarbeitung heißer Erdgasströme eingerichtet sind.

Ferner wird über Leitung 34 ein erster, an Wasserstoff angereicherter und an Methan abgereicherter Permeatstrom aus der Membrantrennvorrichtung 32 ausgeleitet, der einen Druck von typischerweise kleiner als 20 bara, beispielsweise 10 bara, aufweist. Da im Erdgas vorhandene Verunreinigungen wie Sauerstoff und/oder Kohlendioxid dazu neigen, die Membrantrennvorrichtung über den Permeatstrom zu verlassen, wird dieser in einem Beispiel einer Deoxygenierungs- und/oder Kohlendioxid-Entfernungsvorrichtung 35 zugeführt, in der mittels dem Fachmann bekannter Reinigungsverfahren, beispielsweise Adsorption an sauerstoffbindenden Adsorbentien und/oder Kohlendioxid-Abtrennung mittels Gaswäsche, beispielsweise mit aminhaltigen Waschmitteln, die Entfernung von Sauerstoff und/oder Kohlendioxid erfolgt.

Der an Sauerstoff und/oder Kohlendioxid abgereicherte Permeatstrom wird aus der Deoxygenierungs- und/oder Kohlendioxid-Entfernungsvorrichtung 35 mittels Leitung 36 ausgeleitet, mittels eines Verdichters 37 auf den Transportleitungsdruck von rund 60 bara rekomprimiert und über Leitung 38 zu der Transportleitung 10 zurückgeführt und in diese eingeleitet. Die Einleitung erfolgt stromabwärts der ersten Erdgas-Entnahmestelle, wodurch ein an Wasserstoff angereicherter Erdgas-Transportstrom erhalten und weitergeleitet wird. Je nach Art der Vorrichtung 35 kann der Verdichter 37 auch der Vorrichtung 35 vorgeschaltet sein.

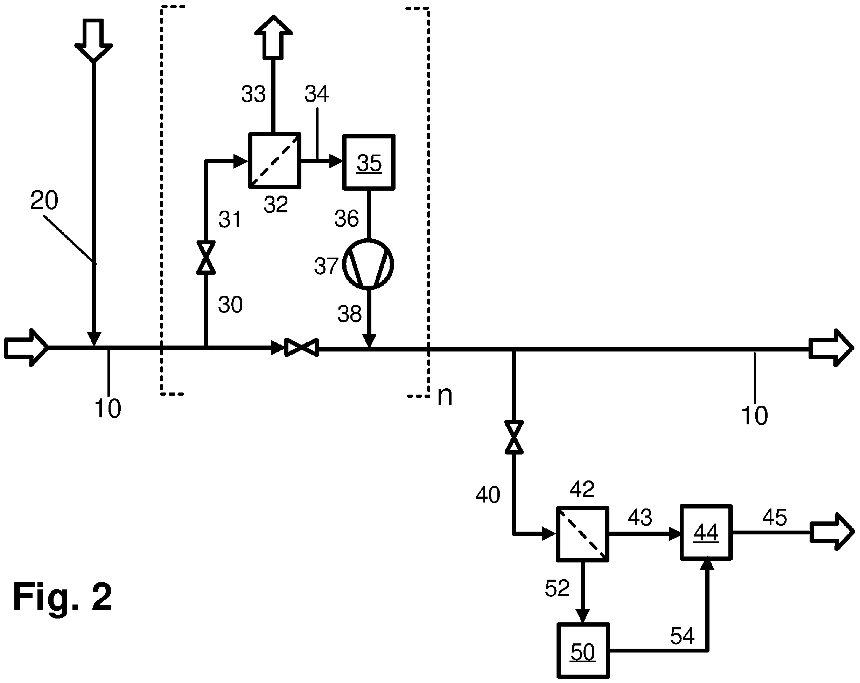

Die Entnahme weiterer Teilströme des transportierten Erdgas-Wasserstoff-Gemischs über weitere Erdgas-Entnahmestelle stromabwärts der ersten Erdgas-Entnahmestelle und stromabwärts voneinander kann einmal oder bevorzugt mehrmals am Ort weiterer Erdgasverbraucher erfolgen. Die ist in den Figuren 1 und 2 dadurch angedeutet, dass der Funktionsblock mit Bezugszeichen zwischen 30 und 38 in gestrichelte eckige Klammern gesetzt und mit einem Multiplikator n versehen wurde, der die Anzahl der Teilstrom-Entnahmen symbolisiert und ganzzahlige Werte von 1 oder größer annehmen kann. Stromabwärts jedes Funktionsblocks n erhöht sich der Wasserstoffgehalt in dem weitertransportierten Erdgas-Wasserstoff-Gemisch, wie in dem nachfolgenden Zahlenbeispiel verdeutlicht wird. Bevorzugt ist eine Entnahme von wenigstens zwei, in einem Beispiel eine eine Entnahme von wenigstens drei Teilströmen des transportierten Erdgas-Wasserstoff-Gemischs stromaufwärts der ersten Wasserstoff-Entnahmestelle.

Am Ort des ersten Wasserstoffverbrauchers wird über eine Leitung 40 und ein im Leitungsweg angeordnetes Dosierventil ein Teilstrom des einfach oder bevorzugt mehrfach, meist bevorzugt mindestens zweifach an Wasserstoff angereicherten Erdgas-Wasserstoff-Gemischs als erster Wasserstoff-Entnahmestrom aus der Transportleitung 10 ausgeleitet, wodurch eine erste Wasserstoff-Entnahmestelle gebildet wird. Sodann wird der ausgeleitete Teilstrom mittels eines nicht bildlich gezeigten Heizers oder Wärmetauschers auf eine Temperatur von 30 bis 100 °C, bevorzugt auf eine Temperatur von 50 bis 90 °C aufgeheizt. Bevorzugt schließt sich daran ein ebenfalls bildlich nicht gezeigter Partikelabscheider und/oder ein Tropfenabscheider an, der Partikel bzw. Flüssigkeitstropfen von der stromabwärts angeordneten Membrantrennvorrichtung fernhält, so dass diese nicht beeinträchtigt wird. In alternativer, bildlich nicht dargestellter, bevorzugter Ausgestaltung wird der Wasserstoff-Entnahmestrom zunächst über einen Partikelabscheider und/oder ein Tropfenabscheider geführt und nachfolgend vor Eintritt in eine zweite Membrantrennvorrichtung 42 erhitzt. Dies weist den Vorteil auf, dass feste Partikel und/oder Tropfen nicht in die Membrantrennvorrichtung gelangen und dort zu Verschmutzung bzw. zu Verstopfungen führen können. Ferner werden durch das nachfolgende Aufheizen eventuell mitgerissene und nicht abgeschiedene Tröpfchen aus dem ausgeleiteten Teilstrom verdampft, was einen zusätzlichen Schutz der Membranen bietet.

Sodann wird der erwärmte und von Partikeln bzw. Tropfen befreite Gasstrom zu einer zweiten Membrantrennvorrichtung 42 weitergeführt und in diese eingeleitet. Die Membrantrennvorrichtung kann einstufig oder bevorzugt mehrstufig ausgeführt werden; bei mehrstufiger Ausführung ist aufgrund des eintretenden Druckverlustes über jede Membrantrennstufe eine Verdichtung zwischen den Stufen vorteilhaft.

In der zweiten Membrantrennvorrichtung erfolgt das Auftrennen des ersten Wasserstoff-Entnahmestroms in einen zweiten, an Wasserstoff abgereicherten Retentatstrom und in einen zweiten, an Wasserstoff angereicherten Permeatstrom. Der zweite, an Wasserstoff abgereicherte und an Methan angereicherte Retentatstrom wird über Leitung 46 aus der zweiten Membrantrennvorrichtung ausgeleitet, optional mittels eines Verdichters 47 rekomprimiert und über Leitung 48 ganz oder teilweise in die Transportleitung 10 zurückgeleitet. Alternativ (bildlich nicht dargestellt) kann der zweite Retentatstrom auch ganz oder teilweise einem weiteren Erdgasverbraucher zugeführt werden; dies wäre für n = 1 der zweite Erdgasverbraucher.

Der zweite, an Wasserstoff angereicherte Permeatstrom wird über Leitung 43 aus der zweiten Membrantrennvorrichtung als Wasserstoff-Ausleitungsstrom ausgeleitet und im gezeigten Ausführungsbeispiel in eine PSA-Anlage 44 zur Reinwasserstofferzeugung eingeleitet. In der PSA-Anlage 44 erfolgt die weitere Reinigung des Wasserstoffstroms durch mehrstufige Druckwechseladsorption unter dem Fachmann an sich bekannten Bedingungen. Über Leitung 45 wird sodann ein Reinwasserstoffstrom mit einem Wasserstoffgehalt von beispielsweise 99,9 mol-% aus der PSA-Anlage ausgeleitet. Dabei ist es besonders bevorzugt, wenn der Wasserstoffgehalt des Wasserstoff-Ausleitungsstroms, der in die PSA-Anlage eingeleitet wird, bereits mindestens größer als 35 mol-%, bevorzugt mindestens 40 mol-%, weiter bevorzugt mindestens 50 mol-%, meist bevorzugt mindestens 60 mol-% beträgt. Durch die Kombination einer optional mehrstufigen Membran-Vortrennung und einer PSA-Nachtrennung kann auf besonders effiziente Weise ein besonders reiner Wasserstoffstrom zurückgewonnen werden. Untersuchungen zeigen, dass dies insbesondere dann gilt, wenn die oben wiedergegebenen Mindestwerte für den Wasserstoffgehalt im Wasserstoff-Ausleitungsstrom eingehalten werden. Besonders günstig ist es dabei, wenn bei der Membran-Vortrennung mindestens zwei Anreicherungsschritte erfolgen und der auf diese Weise angereicherte Wasserstoff-Ausleitungsstrom in die PSA-Anlage eingeleitet wird.

In einer besonderen Ausgestaltung der Erfindung wird der gesamte in der Transportleitung 10 verbliebene Mengenstrom des Erdgas-Wasserstoff-Gemischs als Wasserstoff-Ausleitungsstrom ausgeleitet (bildlich nicht dargestellt). Der bei der Membrantrennung erhaltene Retentatstrom wird bei dieser Ausgestaltung in die Transportleitung 10 zurückgeführt und stromaufwärts einer der Erdgas-Entnahmestellen, beispielsweise der letzten Erdgas-Entnahmestellen vor der Wasserstoffrückgewinnung, in die Transportleitung 10 eingeleitet. Auf diese Weise kann der im Retentatstrom verbliebene Methananteil einem Erdgasverbraucher, beispielsweise dem letzten Erdgasverbraucher, zugeführt und von diesem genutzt werden.

Fig. 2 zeigt ein zweites Beispiel eines Verfahrens bzw. einer Anlage zum Mittransport von Wasserstoff in einer bestehenden Erdgasleitung 10 und zur Wiedergewinnung von spezifikationsgerechtem Erdgas und Reinwasserstoff gemäß einer zweiten Ausgestaltung der Erfindung, das bis zum Bezugszeichen 45 dem in Fig. 1 gezeigten Ausführungsbeispiel entspricht.

Im Gegensatz zu dem in Fig. 1 gezeigten Ausführungsbeispiel wird in Fig. 2 der an Methan angereicherte und an Wasserstoff abgereicherte Retentatstrom aus der zweiten Membrantrennvorrichtung über Leitung 52 ausgeleitet und einer Dampfreformierungsanlage 50 zugeführt. Alternativ kann Anlage 50 auch als Anlage zur Durchführung eines anderen Verfahrens zur Synthesegaserzeugung, beispielsweise als Vergasungsanlage oder als Anlage zur Kohlenwasserstoff-Partialoxidation ausgestaltet sein. In Anlage 50 wird der Retentatstrom als Teil des Kohlenwasserstoffe enthaltenden Einsatzstroms auf dem Fachmann bekannte Weise zu Synthesegas, also Wasserstoff-Kohlenmonoxid-Gemischen umgesetzt. Nach eventueller weiterer Wasserstoffanreicherung mittels CO-Konvertierung und Abtrennung der Kohlenoxide (beides bildlich nicht dargestellt in Fig. 2) wird der erhaltene Rohwasserstoffstrom über Leitung 54 ebenfalls der PSA-Anlage 44 zugeführt, um die Ausbeute an Reinwasserstoff zu erhöhen.

### Zahlenbeispiel

In der nachfolgenden Tabelle werden die physikalischen Eigenschaften und Zusammensetzungen eines in einer Transportleitung transportierten Erdgas-Wasserstoff-Gemischs mit 10 mol-% Wasserstoff vor, zwischen und nach zwei Erdgas-Entnahmestelle ("Stufen") zusammengestellt.

Nach Passieren der zwei Erdgas-Entnahmestellen ("Stufen") beträgt der Wasserstoffgehalt bereits rund 60 mol-%, nach insgesamt drei Erdgas-Entnahmestellen (nicht gezeigt) beträgt der Wasserstoffgehalt sogar über 70 mol-%. Dies erleichtert die Gewinnung von Rein-Wasserstoff in einer nachfolgenden PSA-Anlage.

In dem in der Tabelle dargestellten Zahlenbeispiel wurde das Permeat der Stufe B für n = 2 als Feedstrom in die PSA-Anlage 44 eingeleitet. Die Leitungen 36B bzw. 38B entsprechen daher der Leitung 40 oder 43.

| **Leitung** | **30A** | **33A** | **36A** | **38A / 31B** | **36B** | **33B** |
|---|---|---|---|---|---|---|
| **Name** | **Erdgas-Entnahme Stufe 1** | **Erdgas Stufe 1 zu Verbraucher** | **Permeat Stufe 1** | **Permeat Stufe 1** / **Erdgas-Entnahme Stufe 2** | **Permeat Stufe 2** / **Feed zur PSA** | **Erdgas Stufe 2 zu Verbraucher** |
| **Temperatur [°C]** | 15 | 72 | 74 | 15 | 76 | 75 |
| **Druck [bara]** | 60.0 | 59.2 | 10.0 | 60.0 | 12.0 | 59.2 |
| **Molstrom [Nm3/h]** | 38889 | 27178 | 11710 | 11710 | 6185 | 5525 |
| **Massenstrom [kg/h]** | 27231 | 20849 | 6382 | 6382 | 2344 | 4038 |
| **H2 [mol-%]** | 10.00 | 0.46 | 32.13 | 32.13 | 60.39 | 0.50 |
| **CH4 [mol-%]** | 84.60 | 93.17 | 64.70 | 64.70 | 35.91 | 96.93 |
| **C2 ... C4+ [mol-%]** | 3.95 | 5.41 | 0.57 | 0.57 | 0.08 | 1.12 |
| **CO2 + N2 [mol-%]** | 1.45 | 0.95 | 2.60 | 2.60 | 3.62 | 1.45 |

| | | | | | | |
|---|---|---|---|---|---|---|
| Index A, B bezieht sich auf Werte 1, 2 des Multiplikators n für Zahl der Entnahmestufen | | | | | | |

### Bezugszeichenliste

- [10]: Transportleitung
- [20]: Leitung
- [30]: Leitung
- [31]: Leitung
- [32]: erste Membrantrennvorrichtung
- [33]: Leitung
- [34]: Leitung
- [35]: Deoxygenierungs- und/oder Kohlendioxid-Entfernungsvorrichtung
- [36]: Leitung
- [37]: Verdichter
- [38]: Leitung
- [40]: Leitung (erster Wasserstoff-Entnahmestrom)
- [42]: zweite Membrantrennvorrichtung
- [43]: Leitung
- [44]: PSA-Anlage
- [45]: Leitung
- [46]: Leitung
- [47]: Leitung
- [48]: Leitung
- [52]: Dampfreformierungsanlage
- [54]: Leitung

## Patentansprüche

1. Verfahren zum Transportieren von Wasserstoff mittels eines Erdgas-Leitungssystems und zur Rückgewinnung von Reinwasserstoff und spezifikationsgerechtem Erdgas, umfassend folgende Schritte:
(a) Bereitstellen eines Erdgas-Leitungssystems, umfassend:
- mindestens eine von einem Erdgas-Transportstrom durchströmte Transportleitung (10),
- eine Wasserstoff-Einleitungsstelle,
- mindestens eine Erdgas-Entnahmestelle stromabwärts der Wasserstoff-Einleitungsstelle und
- eine Wasserstoff-Entnahmestelle stromabwärts der mindestens einen Erdgas-Entnahmestelle,
(b) Einleiten eines Wasserstoff-Einleitungsstroms in die von dem Erdgas-Transportstrom durchströmte Transportleitung über die Wasserstoff-Einleitungsstelle,
(c) Ausleiten eines ersten Erdgas-Entnahmestroms, umfassend mindestens einen Teil des Erdgas-Transportstroms, aus der Transportleitung über eine erste Erdgas-Entnahmestelle,
(d) Zuführen des ersten Erdgas-Entnahmestroms zu einer ersten Membrantrennvorrichtung, Auftrennen des ersten Erdgas-Entnahmestroms in der ersten Membrantrennvorrichtung (32) in einen ersten, an Wasserstoff abgereicherten Retentatstrom und in einen ersten, an Wasserstoff angereicherten Permeatstrom,
(e) Ausleiten des ersten Retentatstroms aus der ersten Membrantrennvorrichtung und Zuführen des ersten Retentatstroms zu einem ersten Erdgasverbraucher,
(f) Rückführen des ersten Permeatstroms in die Transportleitung stromabwärts der ersten Erdgas-Entnahmestelle, wodurch ein an Wasserstoff angereicherter Erdgas-Transportstrom erhalten und weitergeleitet wird,
(g) Ausleiten eines ersten Wasserstoff-Entnahmestroms, umfassend mindestens einen Teil des an Wasserstoff angereicherten Erdgas-Transportstroms, aus der Transportleitung über die Wasserstoff-Entnahmestelle,
(h) Zuführen des ersten Wasserstoff-Entnahmestroms zu einer zweiten Membrantrennvorrichtung, Auftrennen des ersten Wasserstoff-Entnahmestroms in der zweiten Membrantrennvorrichtung (42) in einen zweiten, an Wasserstoff abgereicherten Retentatstrom und in einen zweiten, an Wasserstoff angereicherten Permeatstrom,
(i) Ausleiten des zweiten Permeatstroms aus der zweiten Membrantrennvorrichtung als Wasserstoff-Ausleitungsstrom,
(j) Ausleiten des zweiten, an Wasserstoff abgereicherten Retentatstroms aus der zweiten Membrantrennvorrichtung und Zuführen des zweiten Retentatstroms zu einem zweiten Erdgasverbraucher oder Rückführen des zweiten Retentatstroms in die Transportleitung.

2. Verfahren nach Anspruch 1, **dadurch gekennzeichnet, dass** der Wasserstoff-Ausleitungsstrom einer PSA-Anlage (44) zugeführt und in diese eingeleitet wird und ein Reinwasserstoffstrom und mindestens ein PSA-Abgasstrom aus der PSA-Anlage ausgeleitet wird.

3. Verfahren nach Anspruch 1 oder 2, **dadurch gekennzeichnet, dass** die Schritte (c) bis (f) für weitere Erdgasverbraucher mindestens einmal, bevorzugt mehrfach, meist bevorzugt mindestens zweimal wiederholt werden, wodurch ein mehrfach an Wasserstoff angereicherter Erdgas-Transportstrom erhalten und weitergeleitet wird.

4. Verfahren nach einem der vorigen Ansprüche, **dadurch gekennzeichnet, dass** der zweite Erdgasverbraucher eine Dampfreformierungsanlage (52) ist, wobei der zweite Retentatstrom einen Teil des Dampfreformierungs-Einsatzstroms bildet.

5. Verfahren nach Anspruch 4 unter Voraussetzung, dass die PSA Anlage aus Anspruch 2 vorhanden ist, **dadurch gekennzeichnet, dass** mittels der Dampfreformierungsanlage ein Rohwasserstoffstrom erzeugt wird, der zur weiteren Reinigung in die PSA-Anlage eingeleitet wird.

6. Verfahren nach einem der vorigen Ansprüche, **dadurch gekennzeichnet, dass** der erste Permeatstrom und/oder der zweite Permeatstrom und/oder die weiteren Permeatströme verdichtet werden.

7. Verfahren nach einem der vorigen Ansprüche, **dadurch gekennzeichnet, dass** die Entnahmeströme vor dem Zuführen zu einer Membrantrennvorrichtung aufgeheizt werden, bevorzugt auf eine Temperatur von 30 bis 100 °C, meist bevorzugt auf eine Temperatur von 50 bis 90 °C aufgeheizt werden.

8. Verfahren nach Anspruch 7, **dadurch gekennzeichnet, dass** das Aufheizen der Entnahmeströme vor dem Zuführen zu der Membrantrennvorrichtung durch Verbrennen eines Heizgases erfolgt, das mindestens einen Teil des Retentatstroms der Membrantrennvorrichtung oder mindestens einen Teil des Permeatstroms der Membrantrennvorrichtung oder Mischungen beider umfasst.

9. Verfahren nach einem der vorigen Ansprüche, **dadurch gekennzeichnet, dass** die Entnahmeströme vor dem Zuführen zu einer Membrantrennvorrichtung einem Partikelabscheider und/oder einem Tropfenabscheider zugeführt werden.

10. Verfahren nach einem der vorigen Ansprüche, **dadurch gekennzeichnet, dass** der erste Permeatstrom und/oder der zweite Permeatstrom und/oder die weiteren Permeatströme einer Sauerstoff-Entfernungsvorrichtung zugeführt werden.

11. Verfahren nach einem der vorigen Ansprüche, **dadurch gekennzeichnet, dass** der erste Permeatstrom und/oder der zweite Permeatstrom und/oder die weiteren Permeatströme einer Kohlendioxid-Entfernungsvorrichtung zugeführt werden.

12. Verfahren nach Anspruch 11, **dadurch gekennzeichnet, dass** die Kohlendioxid-Entfernungsvorrichtung mindestens eine Vorrichtung umfasst, die aus der folgenden Gruppe ausgewählt ist: Temperaturwechseladsorptionsvorrichtung (TSA), Druckwechseladsorptionsvorrichtung (PSA), Gaswaschvorrichtung, Anlage zur kryogenen Gaszerlegung.

13. Verfahren nach Anspruch 12, **dadurch gekennzeichnet, dass** die Kohlendioxid-Entfernungsvorrichtung eine Gaswaschvorrichtung und/oder eine Vorrichtung zur kryogenen Gaszerlegung umfasst und die zum Betrieb dieser Vorrichtungen benötigte Prozesskälte von einer Luftzerlegungsanlage bezogen wird.

14. Verfahren nach einem der vorigen Ansprüche, **dadurch gekennzeichnet, dass** die erste Membrantrennvorrichtung und/oder die zweite Membrantrennvorrichtung und/oder eine weitere Membrantrennvorrichtung mit mehreren Trennstufen ausgestaltet sind.

15. Verfahren nach einem der vorigen Ansprüche, **dadurch gekennzeichnet, dass** die Entnahmeströme und/oder die zwischen den mehreren Trennstufen erhaltenen Permeatströme auf Drücke zwischen 20 und 100 bara, bevorzugt zwischen 24 und 80 bara, meist zwischen 40 und kleiner 80 bara verdichtet werden, bevor sie in eine nachfolgende Trennstufe eingeleitet werden.

16. Verfahren nach einem der vorigen Ansprüche, **dadurch gekennzeichnet, dass** der Wasserstoffgehalt des Erdgas-Transportstroms nach Schritt (b) zwischen 5 mol-% und 50 mol-%, bevorzugt zwischen 5 mol-% und 30 mol-% beträgt und dass der Wasserstoffgehalt des an die Erdgasverbraucher abgegebenen Gasströme weniger als 1 mol-%, bevorzugt weniger als 0,5 mol-% beträgt.

17. Verfahren nach einem der vorigen Ansprüche unter Voraussetzung, dass die PSA Anlage aus Anspruch 2 vorhanden ist, **dadurch gekennzeichnet, dass** der Wasserstoffgehalt des Wasserstoff-Ausleitungsstroms, der in die PSA-Anlage eingeleitet wird, mindestens größer als 35 mol-%, bevorzugt mindestens 40 mol-%, weiter bevorzugt mindestens 50 mol-%, meist bevorzugt mindestens 60 mol-% beträgt.

18. Verfahren nach einem der vorigen Ansprüche, **dadurch gekennzeichnet, dass** das Rückführen des zweiten Retentatstroms in die Transportleitung stromabwärts der ersten Wasserstoff-Entnahmestelle erfolgt, wodurch ein an Wasserstoff abgereicherter Erdgas-Transportstrom erhalten und weitergeleitet wird.

19. Verfahren nach einem der vorigen Ansprüche unter Voraussetzung, das die PSA Anlage aus Anspruch 2 vorhanden ist, **dadurch gekennzeichnet, dass** der mindestens eine PSA-Abgasstrom in die Transportleitung zurückgeführt oder einem weiteren Erdgasverbraucher zugeführt wird.

## Claims

1. Method of transporting hydrogen by means of a natural gas conduit system and of recovering pure hydrogen and on-spec natural gas, comprising the following steps:
(a) providing a natural gas conduit system comprising:
- at least one transport conduit (10) through which a natural gas transport stream flows,
- a hydrogen introduction site,
- at least one natural gas withdrawal site downstream of the hydrogen introduction site and
- a hydrogen withdrawal site downstream of the at least one natural gas withdrawal site,
(b) introducing a hydrogen introduction stream into the transport conduit through which the natural gas transport stream flows via the hydrogen introduction site,
(c) discharging a first natural gas withdrawal stream comprising at least a portion of the natural gas transport stream from the transport conduit via a first natural gas withdrawal site,
(d) feeding the first natural gas withdrawal stream to a first membrane separation apparatus, separating the first natural gas withdrawal stream in the first membrane separation apparatus (32) into a first, hydrogen-depleted retentate stream and into a first, hydrogen-enriched permeate stream,
(e) discharging the first retentate stream from the first membrane separation apparatus and feeding the first retentate stream to a first natural gas consumer,
(f) recycling the first permeate stream into the transport conduit downstream of the first natural gas withdrawal site, which gives a hydrogen-enriched natural gas transport stream that is passed onward,
(g) discharging a first hydrogen withdrawal stream comprising at least a portion of the hydrogen-enriched natural gas transport stream from the transport conduit via the hydrogen withdrawal site,
(h) feeding the first hydrogen withdrawal stream to a second membrane separation apparatus, separating the first hydrogen withdrawal stream in the second membrane separation apparatus (42) into a second, hydrogen-depleted retentate stream and into a second, hydrogen-enriched permeate stream,
(i) discharging the second permeate stream from the second membrane separation apparatus as hydrogen discharge stream,
(j) discharging the second, hydrogen-depleted retentate stream from the second membrane separation apparatus and feeding the second retentate stream to a second natural gas consumer or recycling the second retentate stream into the transport conduit.

2. Method according to Claim 1, **characterized in that** the hydrogen discharge stream is fed to and introduced into a PSA system (44), and a pure hydrogen stream and at least one PSA offgas stream are discharged from the PSA system.

3. Method according to Claim 1 or 2, **characterized in that** steps (c) to (f), for further natural gas consumers, are repeated at least once, preferably more than once, most preferably at least twice, which affords a repeatedly hydrogen-enriched natural gas transport stream that is passed onward.

4. Method according to any of the preceding claims, **characterized in that** the second natural gas consumer is a steam reforming plant (52), where the second retentate stream forms part of the steam reforming feed stream.

5. Method according to Claim 4, provided that the PSA system from Claim 2 is present, **characterized in that** a crude hydrogen stream is produced by means of the steam reforming plant and is introduced into the PSA system for further purification.

6. Method according to any of the preceding claims, **characterized in that** the first permeate stream and/or the second permeate stream and/or the further permeate streams are compressed.

7. Method according to any of the preceding claims, **characterized in that** the withdrawal streams, before being fed to a membrane separation apparatus, are heated up, preferably to a temperature of 30 to 100°C, most preferably to a temperature of 50 to 90°C.

8. Method according to Claim 7, **characterized in that** the withdrawal streams, before being fed to the membrane separation apparatus, are heated up by combustion of a heating gas comprising at least a portion of the retentate stream from the membrane separation apparatus or at least a portion of the permeate stream from the membrane separation apparatus or mixtures of the two.

9. Method according to any of the preceding claims, **characterized in that** the withdrawal streams, before being fed to a membrane separation apparatus, are fed to a particle separator and/or a droplet separator.

10. Method according to any of the preceding claims, **characterized in that** the first permeate stream and/or the second permeate stream and/or the further permeate streams are fed to an oxygen removal apparatus.

11. Method according to any of the preceding claims, **characterized in that** the first permeate stream and/or the second permeate stream and/or the further permeate streams are fed to a carbon dioxide removal apparatus.

12. Method according to Claim 11, **characterized in that** the carbon dioxide removal apparatus comprises at least one apparatus selected from the following group: temperature swing adsorption apparatus (TSA), pressure swing adsorption apparatus (PSA), gas scrubbing apparatus, cryogenic gas fractionation plant.

13. Method according to Claim 12, **characterized in that** the carbon dioxide removal apparatus comprises a gas scrubbing apparatus and/or a cryogenic gas fractionation apparatus, and the process refrigeration required for operation of these apparatuses is sourced from an air fractionation plant.

14. Method according to any of the preceding claims, **characterized in that** the first membrane separation apparatus and/or the second membrane separation apparatus and/or a further membrane separation apparatus are configured with multiple separation stages.

15. Method according to any of the preceding claims, **characterized in that** the withdrawal streams and/or the permeate streams obtained between the multiple separation stages are compressed to pressures between 20 and 100 bara, preferably between 24 and 80 bara, most preferably between 40 and less than 80 bara, before being introduced into a downstream separation stage.

16. Method according to any of the preceding claims, **characterized in that** the hydrogen content of the natural gas transport stream after step (b) is between 5 mol% and 50 mol%, preferably between 5 mol% and 30 mol%, and **in that** the hydrogen content of the gas streams released to the natural gas consumer is less than 1 mol%, preferably less than 0.5 mol%.

17. Method according to any of the preceding claims, provided that the PSA system from Claim 2 is present, **characterized in that** the hydrogen content of the hydrogen discharge stream that is introduced into the PSA system is at least greater than 35 mol%, preferably at least 40 mol%, more preferably at least 50 mol%, most preferably at least 60 mol%.

18. Method according to any of the preceding claims, **characterized in that** the second retentate stream is recycled into the transport conduit downstream of the first hydrogen withdrawal site, which gives a hydrogen-depleted natural gas transport stream that is passed onward.

19. Method according to any of the preceding claims, provided that the PSA system from Claim 2 is present, **characterized in that** the at least one PSA offgas stream is recycled into the transport conduit or fed to a further natural gas consumer.

## Revendications

1. Procédé pour le transport d'hydrogène au moyen d'un système de canalisations de gaz naturel et pour la récupération d'hydrogène pur et de gaz naturel conforme aux spécifications, comprenant les étapes suivantes :
(a) disposition d'un système de canalisations de gaz naturel, comprenant :
- au moins une canalisation de transport (10) dans laquelle passe un courant de transport de gaz naturel,
- un point d'introduction d'hydrogène,
- au moins un point de prélèvement de gaz naturel en aval du point d'introduction d'hydrogène et
- un point de prélèvement d'hydrogène en aval dudit au moins un point de prélèvement de gaz naturel,
(b) introduction d'un courant d'introduction d'hydrogène par le point d'introduction d'hydrogène dans la canalisation de transport dans laquelle passe le courant de transport de gaz naturel,
(c) évacuation d'un premier courant de prélèvement de gaz naturel, comprenant au moins une partie du courant de transport de gaz naturel, hors de la canalisation de transport, par un premier point de prélèvement de gaz naturel,
(d) envoi du premier courant de prélèvement de gaz naturel à un premier dispositif de séparation par membrane, fractionnement du premier courant de prélèvement de gaz naturel dans le premier dispositif de séparation par membrane (32) en un premier courant de rétentat appauvri en hydrogène et en un premier courant de perméat enrichi en hydrogène,
(e) évacuation; du premier courant de rétentat hors du premier dispositif de séparation par membrane et envoi du premier courant de rétentat à un premier utilisateur de gaz naturel,
(f) renvoi du premier courant de perméat dans la canalisation de transport en aval du premier point de prélèvement de gaz naturel, ce par quoi un courant de transport de gaz naturel enrichi en hydrogène est obtenu et acheminé plus avant,
(g) évacuation d'un premier courant de prélèvement d'hydrogène, comprenant au moins une partie du courant de transport de gaz naturel enrichi en hydrogène, hors de la canalisation de transport, par le point de prélèvement d'hydrogène,
(h) envoi du premier courant de prélèvement d'hydrogène à un deuxième dispositif de séparation par membrane, fractionnement du premier courant de prélèvement d'hydrogène dans le deuxième dispositif de séparation par membrane (42) en un deuxième courant de rétentat appauvri en hydrogène et en un deuxième courant de perméat enrichi en hydrogène,
(i) évacuation du deuxième courant de perméat hors du deuxième dispositif de séparation par membrane, en tant que courant d'évacuation d'hydrogène,
(j) évacuation du deuxième courant de rétentat appauvri en hydrogène hors du deuxième dispositif de séparation par membrane et envoi du deuxième courant de rétentat à un deuxième utilisateur de gaz naturel ou renvoi du deuxième courant de rétentat dans la canalisation de transport.

2. Procédé selon la revendication 1, **caractérisé en ce que** le courant d'évacuation d'hydrogène est envoyé à une unité de PSA (44) et introduit dans celle-ci et un courant d'hydrogène pur et au moins un courant de gaz rejeté de PSA sont évacués hors de l'unité de PSA.

3. Procédé selon la revendication 1 ou 2, **caractérisé en ce que** les étapes (c) à (f) sont répétées au moins une fois, de préférence plusieurs fois, de façon le plus souvent préférée au moins deux fois, pour d'autres utilisateurs de gaz naturel, ce par quoi un courant de transport de gaz naturel plusieurs fois enrichi en hydrogène est obtenu et acheminé plus avant.

4. Procédé selon l'une quelconque des revendications précédentes, **caractérisé en ce que** le deuxième utilisateur de gaz naturel est une unité de reformage à la vapeur (52), le deuxième courant de rétentat constituant une partie du courant de charge du reformage à la;vapeur.

5. Procédé selon la revendication 4 à condition que l'unité de PSA de la revendication 2 soit présente, **caractérisé en ce qu'**au moyen de l'unité de reformage à la vapeur est produit un courant d'hydrogène brut qui est introduit dans l'unité de PSA pour la purification plus poussée.

6. Procédé selon l'une quelconque des revendications précédentes, **caractérisé en ce que** le premier courant de perméat et/ou le deuxième courant de perméat et/ou les courants de perméat ultérieurs sont comprimés.

7. Procédé selon l'une quelconque des revendications précédentes, **caractérisé en ce que** les courants de prélèvement sont chauffés avant l'envoi à un dispositif de séparation par membrane, de préférence jusqu'à une température de 30 à 100 °C, de façon le plus souvent préférée jusqu'à une température de 50 à 90 °C.

8. Procédé selon la revendication 7, **caractérisé en ce que** le chauffage des courants de prélèvement avant l'envoi au dispositif de séparation par membrane s'effectue par combustion d'un gaz de chauffage qui comprend au moins une partie du courant de rétentat du dispositif de séparation par membrane ou au moins une partie du courant de perméat du dispositif de séparation par membrane ou des mélanges des deux.

9. Procédé selon l'une quelconque des revendications précédentes, **caractérisé en ce qu'**avant l'envoi à un dispositif de séparation par membrane les courants de prélèvement sont envoyés à un séparateur de particules et/ou à un séparateur de gouttes.

10. Procédé selon l'une quelconque des revendications précédentes, **caractérisé en ce que** le premier courant de perméat et/ou le deuxième courant de perméat et/ou les courants de perméat ultérieurs sont envoyés à un dispositif d'élimination d'oxygène.

11. Procédé selon l'une quelconque des revendications précédentes, **caractérisé en ce que** le premier courant de perméat et/ou le deuxième courant de perméat et/ou les courants de perméat ultérieurs sont envoyés à un dispositif d'élimination de dioxyde de carbone.

12. Procédé selon la revendication 11, **caractérisé en ce que** le dispositif d'élimination de dioxyde de carbone comprend au moins un dispositif qui est choisi dans le groupe suivant : dispositif d'adsorption à température modulée (TSA), dispositif d'adsorption à pression modulée (PSA), dispositif de lavage de gaz, unité destinée au fractionnement cryogénique de gaz.

13. Procédé selon la revendication 12, **caractérisé en ce que** le dispositif d'élimination de dioxyde de carbone comprend un dispositif de lavage de gaz et/ou un dispositif destiné au fractionnement cryogénique de gaz et le refroidissement de processus requis dans le fonctionnement de ces dispositifs est fourni par une unité de fractionnement d'air.

14. Procédé selon l'une quelconque des revendications précédentes, **caractérisé en ce que** le premier dispositif de séparation par membrane et/ou le deuxième dispositif de séparation par membrane et/ou un dispositif ultérieur de séparation par membrane est/sont muni(s) de plusieurs étages de séparation.

15. Procédé selon l'une quelconque des revendications précédentes, **caractérisé en ce que** les courants de prélèvement et/ou les courants de perméat obtenus entre les plusieurs étages de séparation sont comprimés jusqu'à des pressions comprises entre 20 et 100 bars abs., de préférence entre 24 et 80 bars abs. de façon le plus souvent préférée entre 40 et moins de 80 bars abs., avant d'être introduits dans un étage de séparation suivant.

16. Procédé selon l'une quelconque des revendications précédentes, **caractérisé en ce que** la teneur en hydrogène du courant de transport de gaz naturel après l'étape (b) est comprise entre 5 % en moles et 50 % en moles, de préférence entre 5 % en moles et 50 % en moles et **en ce: que** la teneur en hydrogène des courants de gaz fournis aux utilisateurs de gaz naturel est inférieure à 1 % en moles, de préférence inférieure à 0,5 % en moles.

17. Procédé selon l'une quelconque des revendications précédentes à condition que l'unité de PSA de la revendication 2 soit présente, **caractérisé en ce que** la teneur en hydrogène du courant d'évacuation d'hydrogène, qui est introduit dans l'unité de PSA, est au moins supérieure à 35 % en moles, de préférence d'au moins 40 % en moles, encore mieux d'au moins 50 % en moles, de façon le plus souvent préférée d'au moins 60 % en moles.

18. Procédé selon l'une quelconque des revendications précédentes, **caractérisé en ce que** le renvoi du deuxième courant de rétentat dans la canalisation de transport s'effectue en aval du premier point de prélèvement d'hydrogène, ce par quoi un courant de transport de gaz naturel appauvri en hydrogène est obtenu et acheminé plus avant.

19. Procédé selon l'une quelconque des revendications précédentes à condition que l'unité de PSA de la revendication 2 soit présente, **caractérisé en ce que** ledit au moins un courant de gaz rejetés de PSA est renvoyé dans la canalisation de transport ou envoyé à un utilisateur :ultérieur de gaz naturel
